# EUROPÄISCHE PATENTSCHRIFT

(11) **EP 2 840 166 B1**
(45) Veröffentlichungstag und Bekanntmachung des Hinweises auf die Patenterteilung: **26.09.2018**
(21) Anmeldenummer: 14178395.1
(22) Anmeldetag: 24.07.2014
(51) Int. Cl.: C23C 10/60, C23C 10/28, C23C 10/30, C23C 28/04, F01D 5/28, B23K 101/00, C23C 24/10, B23K 1/00, C23C 28/02

(54) **Intermetallische Verschleißschutzschicht für Titan-Werkstoffe**
Intermetallic anti-wear protective coating for titanium materials
Couche de protection contre l'usure inter-métallique pour matières premières en titane

(30) Priorität: 19.08.2013 DE 102013216393
(43) Veröffentlichungstag der Anmeldung: 25.02.2015
(73) Patentinhaber: MTU Aero Engines AG, 80995 München (DE)
(72) Erfinder: Werner, André, 80639 München (DE); Daniels, Bernd, 82194 Gröbenzell (DE); Straßer, Michael, 85253 Kleinberghofen (DE)

(56) Entgegenhaltungen:
- EP-A1- 2 275 220
- EP-A1- 2 522 452
- WO-A1-95/25185
- DE-A1- 4 112 218
- DE-A1-102011 087 158
- JP-A- S4 972 143
- US-B1- 6 670 049
- US-B2- 7 093 335

## Beschreibung

### HINTERGRUND DER ERFINDUNG

### GEBIET DER ERFINDUNG

Die vorliegende Erfindung betrifft ein Verfahren zur Herstellung einer Verschleiß schutzschicht, insbesondere auf Bauteilen von Gasturbinen oder Flugzeugtriebwerken, die zumindest teilweise aus einem Titan - Werkstoff gebildet sind. Außerdem betrifft die vorliegende Erfindung ein derartiges Bauteil für Gasturbinen oder Flugzeugtriebwerke mit einer entsprechenden Verschleißschutzschicht.

### STAND DER TECHNIK

Bei Strömungsmaschinen, wie stationären Gasturbinen oder Flugzeugtriebwerken, werden Bauteile, wie beispielsweise Laufschaufeln, aufgrund der herrschenden äußeren Umgebungsbedingungen mit hohen Temperaturen, oxidierenden und korrodierenden Medien und hohen Dreh - und Strömungsgeschwindigkeiten starken Belastungen ausgesetzt, die unter anderem zum Verschleiß, insbesondere Ermüdungs- und/oder Abrasivverschleiß der Bauteile führen können.

Dies gilt insbesondere für Bauteile, die aus Titan - Werkstoffen gebildet sind, deren Hauptbestandteil somit aus Titan besteht. Als Hauptbestandteil der chemischen Zusammensetzung wird hierbei das chemischen Element verstanden, dessen Anteil an der chemischen Zusammensetzung absolut dem größten Anteil des Werkstoffs entspricht, also bei Titan - Werkstoffen entsprechend Titan. Unter Titan - Werkstoffen werden insbesondere auch Werkstoffe auf Basis von intermetallischen Verbindungen, wie beispielsweis Titanaluminide verstanden. Entsprechend wird bei der vorliegenden Offenbarung auch eine Legierung, die beispielsweise aus gleich großen Bestandteilen von Titan und Aluminium besteht, unter dem Begriff "Titan - Werkstoff" subsumiert.

Da die Verschleißproblematik für Bauteile von Gasturbinen oder Flugzeugtriebwerken bereits bekannt ist, gibt es im Stand der Technik verschiedene Vorschläge für Schutzschichten, sogenannte Verschleißschutzschichten, die den Verschleiß der Bauteile mindern sollen. Insbesondere sind unterschiedlichste Beschichtungen bekannt, die eine hohe Härte aufweisen, um dadurch den Verschleiß zu mindern. Die verschiedenen Verschleißschutzschichten können auf unterschiedliche Art und Weise auf den Bauteilen aufgebracht werden, beispielsweise durch thermisches Spritzen, Auftragsschweißungen, physikalische Dampfphasenabscheidung (physical vapour deposition - PVD) oder chemische Dampfphasenabscheidung (chemical vapour deposition - CVD) oder durch Auftragslötungen. Allerdings ist bei den bisher bekannten Lösungen häufig das Problem zu beobachten, dass die Haftung, d.h. die Anbindung der Verschleißschutzschicht an den Grundwerkstoff des Bauteils nicht ausreichend ist, sodass es zu einer Ablösung der Verschleißschutzschicht kommen kann.

Darüber hinaus kann es bei der Aufbringung von Verschleißschutzschichten durch Inkompatibilitäten mit dem Grundwerkstoff zu Problemen kommen. So beschreibt die US 8,393,528 B2 das Aufbringen eines Verschleißschutzmaterials, welches in Form eines separat gefertigten Körpers auf einer TiAl - Legierung aufgelötet wird, um die Vermischung der TiAl - Legierung mit der Hartstofflegierung, wie beispielsweise einer Kobalt - Chrom - Legierung, zu vermeiden, um dadurch spröde Phasen und Rissbildung auszuschließen. Allerdings ist ein derartiges Verfahren mit der separaten Herstellung eines verschleißbeständigen Bauteils und dem anschließenden Aufbringen des Bauteils auf die zu schützende Oberfläche sehr aufwändig.

Ein Verfahren nach dem Oberbegriff von Anspruch 1 und ein Bauteil nach dem Oberbegriff von Anspruch 8 sind beispielsweise aus der EP 2 522 452 A1 bekannt. Ein Reparaturverfahren zum Ersetzen einer Al-Beschichtung auf einem Legierungssubstrat, das auf zumindest einem Element aus der Gruppe Fe, Co und Ni basiert, ist aus der US7093335B2 bekannt. Dieses Verfahren umfasst das Aufbringen einer Ersatzbeschichtung auf einer Diffusionszone, nachdem ein äußerer Beschichtungsbereich über der Diffusionszone entfernt wurde.

### OFFENBARUNG DER ERFINDUNG

### AUFGABE DER ERFINDUNG

Es ist deshalb Aufgabe der vorliegenden Erfindung, eine Verschleißschutzschicht für Titan - Werkstoffe sowie ein entsprechendes Herstellungsverfahren bereitzustellen, welche eine einfache Aufbringung und Erzeugung der Verschleiß schutz schicht bei gleichzeitig guter Verschleißbeständigkeit und Haftung der Verschleißschutzschicht an dem Grundwerkstoff des Bauteils ermöglichen.

### TECHNISCHE LÖSUNG

Diese Aufgabe wird gelöst durch ein Verfahren mit den Merkmalen des Anspruchs 1 sowie ein Bauteil mit den Merkmalen des Anspruchs 8. Vorteilhafte Ausgestaltungen sind Gegenstand der abhängigen Ansprüche.

Der Erfindung liegt die Idee zugrunde, dass die für die Verschleißbeständigkeit erforderlichen harten Bestandteile einer Verschleißschutzschicht unmittelbar bei der Herstellung und Aufbringung der Verschleißschutzschicht erzeugt werden können, sodass gleichzeitig die Haftfestigkeit der Verschleißschutzschicht verbessert werden kann. Hierzu wird auf der den Titan-Werkstoff enthaltenden Oberfläche des zu schützenden Bauteils ein Lot mit einer Kobalt - Basislegierung aufgebracht und mit dem Bauteil verlötet, sodass durch die Diffusionsprozesse bei der Wärmebehandlung während der Lötung mindestens eine Diffusionszone entsteht, die intermetallische Phasen aufweist, welche die erforderliche Härte für Hartstoffphasen in Verschleißschutzbeschichtungen aufweisen. Entsprechend kann die Diffusionszone zumindest als Teil einer Verschleißschutzschicht dienen. Gleichzeitig wird durch die Diffusion von Bestandteilen des Lots in den Titan - Werkstoff und/oder von dem Titan - Werkstoff in das Lot und die Ausbildung der Diffusionszone eine gute Haftfestigkeit erzielt.

Unter Kobalt - Basis - Werkstoff wird ähnlich wie beim Titan - Werkstoff jeder Werkstoff verstanden, dessen Hauptbestandteil, also Bestandteil mit dem größten Anteil in der chemischen Zusammensetzung, Kobalt ist. Das Kobalt - Lot kann jedoch weitere Elemente, wie Chrom, Molybdän, Eisen, Nickel, Wolfram, Tantal, Titan, Zirkon und Silizium umfassen, wobei durch Diffusion der Bestandteile des Lots in den Titan - Werkstoff hinein und der Elemente des Titan - Werkstoffs, wie beispielsweise Molybdän, Niob, Aluminium, Bor und Silizium aus dem Titanwerkstoff heraus in das Lot intermetallische Phasen ausgebildet werden, die beispielsweise auf den binären Systemen Co-Ti, Co-Al, Ti-B und Mo-Si beruhen. Allerdings können die entsprechenden intermetallischen Phasen nicht nur zwei Elemente als Bestandteile aufweisen, sondern zusätzliche Elemente enthalten. Lediglich die sich ausbildenden intermetallischen Phasen können insbesondere kristallographisch auf den oben bezeichneten binären Systemen beruhen.

Da die Diffusionszonen mit den darin ausgebildeten intermetallischen Phasen die gewünschte Härte für eine Verschleißschutzschicht aufweisen, wird das überschüssige Lot über den Diffusionszonen nach der Durchführung des Lötens entfernt, sodass die mindestens eine ausgebildete Diffusionszone als Verschleißschutzschicht an der Oberfläche des entsprechend behandelten Bauteils vorliegt.

In dem Lot können zusätzlich Hartphasenpartikel, wie beispielsweise keramische und/oder intermetallische Phasen vorgesehen sein, die durch den Lötprozess in die entstehende Verschleißschutzschicht eingelagert werden. Beispielsweise können die Hartphasenpartikel durch Laves - Phasen einer Hartstofflegierung gebildet sein, die mit dem Lot vermischt werden kann.

Das Lot kann in verschiedenen Formen beispielsweise als Paste oder Halbzeug, insbesondere als sogenanntes Lottape, aufgebracht werden, bei welchem das Lot beispielsweise als Band oder Platte vorliegt, die auf dem zu beschichtenden Bauteil aufgebracht und dort verlötet werden können.

Das Löten kann bei Temperaturen von 1.000°C bis 1.200°C, insbesondere 1.100°C bis 1.200°C, und vorzugsweise 1.150°C bis 1.200°C mit einer Haltezeit von 2 Minuten bis 10 Minuten unter Schutzgas oder Vakuum erfolgen. Neben einer vollständigen Erwärmung des zu schützenden Bauteils mit dem aufgebrachten Lot kann auch eine lokale Erwärmung nur des Lot - bzw. des Oberflächenbereichs, beispielsweise durch induktive Erwärmung, vorgesehen sein. Durch den Lötprozess bildet sich an der Oberfläche des behandelten Bauteils bzw. unterhalb des aufgebrachten Lots mindestens eine Diffusionszone aus, in der intermetallische Phasen eingelagert sind, die Kobalt und/oder Titan enthalten und je nach Zusammensetzung des Titan - Werkstoff und/oder des Lots weitere chemische Elemente enthalten können, wie beispielsweise Chrom, Molybdän, Eisen, Nickel, Wolfram, Tantal, Titan, Zirkon, Aluminium, Niob, Bor und/oder Silizium.

Insbesondere kann sich eine zweilagige Diffusionszone mit einer sich in den Titan - Werkstoff erstreckenden Diffusionszone und einer in die kobalthaltige Beschichtung erstreckenden Diffusionszone ausgebildet werden, die durch das Diffundieren in den Grundwerkstoff des Bauteils und aus dem Grundwerkstoff des Bauteils heraus in das Kobaltlot entstehen.

### KURZBESCHREIBUNG DER FIGUREN

Die beigefügten Zeichnungen zeigen in rein schematischer Darstellung in
- Fig. 1: einen teilweisen Querschnitt durch eine zu beschichtende Bauteiloberfläche mit einer aufgebrachten Lotpaste;
- Fig.2: eine teilweise Schnittansicht durch die Bauteiloberfläche aus Figur 1 nach dem Durchführen des Lötprozesses; und in
- Fig. 3: eine teilweise Schnittansicht durch die Bauteiloberfläche aus den Figuren 1 und 2 nach Entfernung des überschüssigen Lotmaterials mit einer zweilagigen Verschleißschutzschicht.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten

Figuren deutlich. Allerdings ist die Erfindung nicht auf dieses Ausführungsbeispiel beschränkt.

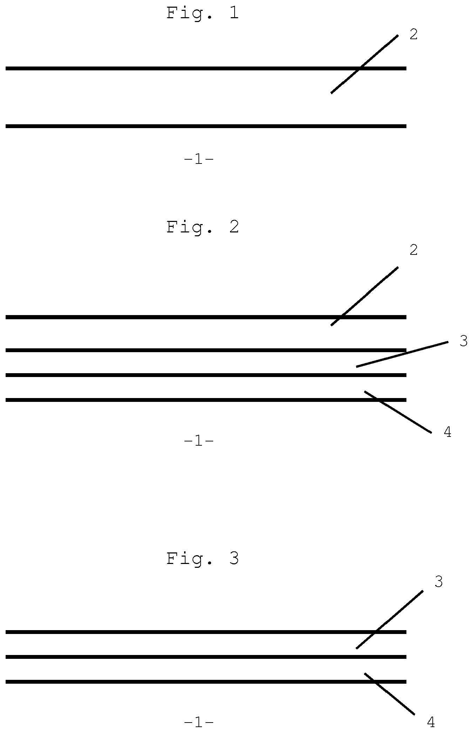

Die Figur 1 zeigt einen Schnitt durch einen Teil einer Oberfläche eines Bauteils 1, wobei auf der Oberfläche eine Lotpaste 2 aufgebracht ist. Die Bauteiloberfläche des Bauteils 1 ist aus einem Titan - Werkstoff, wie beispielsweise einer TiAl - Legierung gebildet, die nahezu mit gleichen Anteilen als Hauptbestandteile Titan und Aluminium sowie weitere Legierungsbestandteile wie Niob und Molybdän aufweisen kann. Die Lotpaste 2 ist aus einem Gemisch eines Kobalt - Basislots und Hartphasenpartikeln, beispielsweise in Form einer Hartstofflegierung gebildet. Beispielsweise kann das Kobalt - Basis - Lot durch die Legierung MAR-M-509 (Marke der Firma Martin Marietta) gebildet sein, die 6,5 bis 7,5 Gew.% Wolfram, 3 bis 4 Gew.% Tantal, 22,5 bis 24,35 Gew.% Chrom, 0,55 bis 0,65 Gew.% Kohlenstoff, 9 bis 11 Gew.% Nickel sowie Titan und Zirkon und dem Rest Kobalt umfasst. In diese Kobalt - Legierung kann die Hartstofflegierung Tribaloy T-800 (Marken der Deloro Stellite Holdings Corporation) in Pulverform eingemischt sein.

Das Bauteil 1 mit der Lotpaste 2 kann bei einer Temperatur zwischen 1.150°C und 1.200°C und einer Haltedauer von 5 Minuten unter Vakuum geglüht und anschließend schnell abgekühlt werden, sodass durch die Wärmebehandlung ein Lotprozess stattfindet, bei dem die Lotpaste 2 durch Diffusionsvorgänge fest mit dem Bauteil 1 verbunden wird. Durch entsprechende Diffusion von Bestandteilen aus dem Bauteil 1 in die Lotpaste 2 kann sich, wie in Figur 2 gezeigt, eine Diffusionszone 3 ausbilden, während durch Diffusion von Bestandteilen der Lotpaste 2 in das Bauteil 1 eine Diffusionszone 4 ausgebildet wird, wobei die Diffusionszonen unterschiedliche chemische Zusammensetzungen aufweisen. So kann beispielsweise die Diffusionszone 3 11 Gew.% Chrom, 4 Gew.% Nickel, 13 Gew.% Molybdän, 2 Gew.% Silizium, 13 Gew.% Titan, 8 Gew.% Aluminium und 1 Gew.% Niob sowie dem Rest Kobalt aufweisen, während die Diffusionszone 4 21 Gew.% Chrom, 12 Gew.% Molybdän, 1 Gew.% Silizium, 12 Gew.% Titan, 6 Gew.% Aluminium und 1 Gew.% Niob sowie dem Rest Kobalt aufweisen kann. Zusätzlich kann sich eine weiter in den Grundwerkstoff des Bauteils 1 sich erstreckende Anbindungszone mit geringen Anteilen von Kobalt und Chrom ausbilden (nicht gezeigt).

In den Diffusionszonen kommt es zur Ausbildung von intermetallischen Phasen, insbesondere von intermetallischen Co-Ti-Phasen, Co-Al-Phasen, Ti-B-Phasen und Mo-Si-Phasen. Diese intermetallischen Phasen weisen zusammen mit den eingelagerten Hartstoffpartikeln eine hohe Härte und Festigkeit auf, sodass die Diffusionszonen abriebfest und verschleißbeständig sind.

Entsprechend wird zur Fertigstellung der Verschleißschutzschicht die verbliebene Lotpaste 2 entfernt, sodass die Diffusionszonen 3,4 an der Oberfläche des entsprechend behandelten Bauteils 1 zu liegen kommen (siehe Figur 3).

Anstelle einer Lotpaste mit einer Mischung aus einem Kobalt - Basislot und Hartphasenpartikeln kann auch nur ein Kobalt - Basis - Lot ohne zusätzliche Einlagerung von Hartphasenpartikeln vorgesehen werden, da bereits durch die beim Lotprozess entstehenden intermetallischen Phasen eine ausreichende Festigkeit sowie Härte und somit Verschleißbeständigkeit gegeben ist.

Anstelle einer Lotpaste kann das Lot auch in anderer Form aufgebracht werden, beispielsweise in Form einer Lottapes, d.h. eines Halbzeugs aus dem Lotwerkstoff, welcher zur Erzielung der Formstabilität zusätzlich ein geeignetes Bindemittel aufweisen kann.

Anstelle einer vollständigen Wärmebehandlung des mit der Verschleiß schutzschicht zu versehenden Bauteils während des Lötens kann auch eine lokale Erwärmung im Bereich der Oberfläche des Bauteils bzw. im Bereich des Lotauftrags ausreichend sein. Beispielsweise könnte das Löten induktiv durchgeführt werden, um den Grundwerkstoff des Bauteils nicht thermisch zu belasten.

Statt der im Ausführungsbeispiel beschriebenen zwei Diffusionszonen ist es auch möglich, dass sich lediglich eine einzige homogene Diffusionszone ausbildet.

Durch die Ausbildung der Diffusionszonen werden einerseits harte und somit die Verschleißbeständigkeit erhöhende intermetallische Phasen gebildet und andererseits erfolgt eine innige Anbindung der Verschleißschutzschicht durch die Interdiffusion von Lot und Grundwerkstoff des Bauteils. Entsprechend ist daher eine gute Haftfestigkeit der Verschleißschutzschicht gegeben.

Obwohl die vorliegende Erfindung anhand des Ausführungsbeispiels detailliert beschrieben worden ist, ist für den Fachmann selbstverständlich, dass die Erfindung nicht auf diese Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird.

## Patentansprüche

1. Verfahren zur Herstellung einer Verschleißschutzschicht, insbesondere auf Bauteilen von Gasturbinen oder Flugzeugtriebwerken, welches umfasst:
Bereitstellen eines Bauteils (1) mit einem Titan - Werkstoff zumindest an einem Teil einer Oberfläche des Bauteils, auf der die Verschleißschutzschicht erzeugt werden soll,
Aufbringen eines Lots (2), das aus einem Kobalt - Basiswerkstoff gebildet ist, auf dem Titan - Werkstoff,
Verlöten des Lots mit dem Titan - Werkstoff durch Wärmeeinbringung und Erzeugen mindestens einer Diffusionszone (3,4) zwischen Lot und Titan - Werkstoff, die intermetallische Phasen umfasst;
**gekennzeichnet, durch das**
Entfernen des überschüssigen Lots (2) über der Diffusionszone, sodass die mindestens eine ausgebildete Diffusionszone als Verschleißschutzschicht an der Oberfläche des entsprechend behandelten Bauteils vorliegt.

2. Verfahren nach dem vorhergehenden Anspruch,
**dadurch gekennzeichnet, dass**
das Lot (2) Hartphasenpartikel, insbesondere keramische oder intermetallische Phasen umfasst.

3. Verfahren nach einem der vorhergehenden Ansprüche,
**dadurch gekennzeichnet, dass**
das Lot (2) in Form einer Paste oder eines Halbzeugs aufgebracht wird.

4. Verfahren nach einem der vorhergehenden Ansprüche,
**dadurch gekennzeichnet, dass**
das Lot als Hauptbestandteil Kobalt und ein oder mehrere Elemente der Gruppe umfasst, die Chrom, Molybdän, Eisen, Nickel, Wolfram, Tantal, Titan, Zirkon und Silizium umfasst.

5. Verfahren nach einem der vorhergehenden Ansprüche,
**dadurch gekennzeichnet, dass**
der Titan - Werkstoff Titan als Hauptbestandteil und ein oder mehrere Elemente der Gruppe umfasst, die Molybdän, Niob, Aluminium, Bor und Silizium umfasst.

6. Verfahren nach einem der vorhergehenden Ansprüche,
**dadurch gekennzeichnet, dass**
das Löten bei Temperaturen von 1000°C bis 1200°C, insbesondere 1100°C bis 1200°C, vorzugsweise 1150°C bis 1200°C und/oder einer Haltezeit von 2 min bis 10 min und/oder unter Schutzgas oder Vakuum erfolgt.

7. Verfahren nach einem der vorhergehenden Ansprüche,
**dadurch gekennzeichnet, dass**
die Diffusionszone intermetallische Phasen auf Basis mindestens eines der binären Systeme aus der Gruppe umfasst, die Co - Ti, Co - Al, Ti - B und Mo - Si aufweist.

8. Bauteil für Gasturbinen oder Flugzeugtriebwerke mit einem Titan - Werkstoff an zumindest einem Teil einer Oberfläche des Bauteils (1) und mit einer Verschleißschutzschicht (3,4), die auf dem Titan - Werkstoff aufgebracht ist, und die mit einem Verfahren nach einem der vorhergehenden Ansprüche aufgebracht worden ist,
wobei die Verschleißschutzschicht mindestens eine Diffusionszone (3,4) mit einem Anteil an Kobalt und intermetallischen Phasen, die Kobalt und Titan enthalten, aufweist;
**dadurch gekennzeichnet, dass**
durch Entfernen überschüssigen Lots (2) die mindestens eine ausgebildete Diffusionszone (3,4) als Verschleißschutzschicht an der Oberfläche des entsprechend behandelten Bauteils vorliegt.

9. Bauteil nach Anspruch 8,
**dadurch gekennzeichnet, dass**
sich die Diffusionszone (3,4) nach innen in den Titan - Werkstoff erstreckt und/oder nach außen in eine Co - haltige Beschichtung erstreckt.

10. Bauteil nach Anspruch 8 oder 9,
**dadurch gekennzeichnet, dass**
die Diffusionszone eingelagerte Hartstoffpartikel umfasst.

11. Bauteil nach einem der Ansprüche 8 bis 10,
**dadurch gekennzeichnet, dass**
die Diffusionszone (3,4) als Hauptbestandteil Kobalt und ein oder mehrere Elemente der Gruppe umfasst, die Chrom, Molybdän, Eisen, Nickel, Wolfram, Tantal, Titan, Zirkon, Aluminium, Niob, Bor und Silizium umfasst.

## Claims

1. Method for producing a wear-resistant layer, in particular on components of gas turbines or aircraft engines, comprising:
providing a component (1) with a titanium material at least on one part of a surface of the component on which the wear-resistant layer is intended to be produced,
applying a solder (2) consisting of a cobalt base material to the titanium material,
soldering the solder to the titanium material by introducing heat, and producing at least one diffusion zone (3, 4) between the solder and the titanium material, which zone comprises intermetallic phases;
**characterized by**
removing the excess solder (2) on top of the diffusion zone, such that the at least one diffusion zone formed is present as a wear-resistant layer on the surface of the component treated accordingly.

2. Method according to the preceding claim,
**characterized in that**
the solder (2) comprises hard phase particles, in particular ceramic or intermetallic phases.

3. Method according to either of the preceding claims,
**characterized in that**
the solder (2) is applied in the form of a paste or a semi-finished product.

4. Method according to any of the preceding claims,
**characterized in that**
the solder comprises cobalt as the main component and one or more elements of the group comprising chromium, molybdenum, iron, nickel, tungsten, tantalum, titanium, zirconium and silicon.

5. Method according to any of the preceding claims,
**characterized in that**
the titanium material comprises titanium as the main component and one or more elements of the group comprising molybdenum, niobium, aluminum, boron, and silicon.

6. Method according to any of the preceding claims,
**characterized in that**
the soldering takes place at temperatures of from 1000°C to 1200°C, in particular 1100°C to 1200°C, preferably 1150°C to 1200°C and/or a holding time of from 2 min to 10 min and/or using protective gas or a vacuum.

7. Method according to any of the preceding claims,
**characterized in that**
the diffusion zone comprises intermetallic phases based on at least one of the binary systems from the group including Co-Ti, Co-AI, Ti-B and Mo-Si.

8. Component for gas turbines or aircraft engines comprising a titanium material on at least one part of a surface of the component (1) and comprising a wear-resistant layer (3, 4) which is applied to the titanium material and which has been applied using a method according to any of the preceding claims,
the wear-resistant layer including at least one diffusion zone (3, 4) having a proportion of cobalt and intermetallic phases containing cobalt and titanium;
**characterized in that**
by removing excess solder (2), the at least one diffusion zone (3, 4) formed is present as a wear-resistant layer on the surface of the component treated accordingly.

9. Component according to claim 8,
**characterized in that**
the diffusion zone (3, 4) extends inwardly into the titanium material and/or outwardly into a Co-containing coating.

10. Component according to either claim 8 or claim 9,
**characterized in that**
the diffusion zone comprises embedded hard material particles.

11. Component according to any of claims 8 to 10,
**characterized in that**
the diffusion zone (3, 4) comprises cobalt as the main component and one or more elements of the group comprising chromium, molybdenum, iron, nickel, tungsten, tantalum, titanium, zirconium, aluminum, niobium, boron and silicon.

## Revendications

1. Procédé de production d'une couche de protection contre l'usure, en particulier sur des composants de turbines à gaz ou de moteurs d'aéronef, à le procédé comprenant :
la fourniture d'un composant (1) comprenant une matière à base de titane au moins sur une partie d'une surface du composant, sur laquelle la couche de protection contre l'usure doit être formée,
l'application d'un métal d'apport de brasage (2) constitué d'une matière à base de cobalt, sur la matière à base de titane,
le brasage du métal d'apport avec la matière à base de titane par apport de chaleur et la génération d'au moins une zone de diffusion (3, 4) entre le métal d'apport et la matière à base de titane, laquelle zone de diffusion comprend des phases intermétalliques ;
**caractérisé par**
le retrait du métal d'apport (2) en excédent via la zone de diffusion de telle sorte que l'au moins une zone de diffusion formée est présente sous la forme d'une couche de protection contre l'usure à la surface du composant traité de manière appropriée.

2. Procédé selon la revendication précédente,
**caractérisé en ce que**
le métal d'apport (2) comprend des particules de phases dures, en particulier des phases céramiques ou intermétalliques.

3. Procédé selon l'une des revendications précédentes,
**caractérisé en ce que**
le métal d'apport (2) est appliqué sous la forme d'une pâte ou d'un produit semi-fini.

4. Procédé selon l'une des revendications précédentes,
**caractérisé en ce que**
le métal d'apport comprend comme composant principal du cobalt et un ou plusieurs éléments du groupe comportant le chrome, le molybdène, le fer, le nickel, le tungstène, le tantale, le titane, le zirconium et le silicium.

5. Procédé selon l'une des revendications précédentes,
**caractérisé en ce que**
la matière à base de titane comprend comme composant principal du titane et un ou plusieurs éléments du groupe comportant le molybdène, le niobium, l'aluminium, le bore et le silicium.

6. Procédé selon l'une des revendications précédentes,
**caractérisé en ce que**
le brasage est effectué à des températures de 1000 °C à 1200 °C, en particulier de 1100 °C à 1200 °C, de préférence de 1150 °C à 1200 °C et/ou avec un temps de maintien de 2 min à 10 min et/ou sous gaz de protection ou sous vide.

7. Procédé selon l'une des revendications précédentes,
**caractérisé en ce que**
la zone de diffusion comprend des phases intermétalliques à base d'au moins un des systèmes binaires du groupe comprenant Co - Ti, Co - Al, Ti - B et Mo - Si.

8. Composant pour turbine à gaz ou moteurs d'aéronef, le composant comprenant une matière à base titane sur au moins une partie d'une surface du composant (1) et une couche de protection contre l'usure (3, 4) qui est appliquée sur la matière à base de titane, et qui a été appliquée à l'aide d'un procédé selon l'une des revendications précédentes,
la couche de protection contre l'usure comportant au moins une zone de diffusion (3, 4) comprenant une proportion de cobalt et des phases intermétalliques contenant du cobalt et du titane ;
**caractérisé en ce que**
grâce au retrait du métal d'apport (2) en excédent l'au moins une zone de diffusion formée (3, 4) est présente sous la forme d'une couche de protection contre l'usure à la surface du composant traité de manière appropriée.

9. Composant selon la revendication 8,
**caractérisé en ce que**
la zone de diffusion (3, 4) s'étend vers l'intérieur dans la matière à base de titane et/ou vers l'extérieur jusque dans un revêtement contenant du cobalt.

10. Composant selon la revendication 8 ou 9,
**caractérisé en ce que**
la zone de diffusion comprend des particules de matière dure incorporées.

11. Composant selon l'une des revendications 8 à 10,
**caractérisé en ce que**
la zone de diffusion (3, 4) comprend du comme composant principal cobalt et un ou plusieurs éléments du groupe comprenant le chrome, le molybdène, le fer, le nickel, le tungstène, le tantale, le titane, le zirconium, l'aluminium, le niobium, le bore et le silicium.
